# EUROPÄISCHE PATENTSCHRIFT

(11) **EP 0 644 709 B1**
(45) Veröffentlichungstag und Bekanntmachung des Hinweises auf die Patenterteilung: **02.12.1998**
(21) Anmeldenummer: 94114020.4
(22) Anmeldetag: 07.09.1994
(51) Int. Cl.: H05B 41/29, H05B 41/38

(54) **Einrichtung zum Starten und Betreiben einer Gasentladungslampe in Kraftfahrzeugen**
Device for starting and operating a discharge lamp in a vehicle
Dispositif pour démarrer et alimenter une lampe à décharge sur une automobile

(30) Priorität: 21.09.1993 DE 4331952
(43) Veröffentlichungstag der Anmeldung: 22.03.1995
(73) Patentinhaber: Hella KG Hueck & Co., 59552 Lippstadt (DE)
(72) Erfinder: Daub, Wolfgang, D-59558 Lippstadt (DE)

(56) Entgegenhaltungen:
- EP-A- 0 415 496
- EP-A- 0 459 126
- GB-A- 2 265 506

## Beschreibung

Die Erfindung betrifft eine Einrichtung zum Starten und Betreiben einer Gasentladungslampe in Kraftfahrzeugen, mit einem primärgetakteten Schaltregler zur Versorgung einer Lampenansteuerungseinrichtung für die Gasentladungslampe, mit einer Einrichtung zur Erfassung der Ausgangsleistung des Schaltreglers, mit einem Regler, der aufgrund der Ausgangsleistung des Schaltreglers ein Regelsignal zur Beeinflussung des Primärstromes des Schaltreglers erzeugt, mit einem Begrenzer zur Begrenzung des Regelsignals, mit einer Steuereinrichtung, die abhängig von den Betriebsbedingungen der Gasentladungslampe dem Regler einen Leistungs-Soll-Wert vorgibt.

Gasentladungslampen, insbesondere solche, die für den kontinuierlichen Betrieb in Kraftfahrzeugen vorgesehen sind, benötigen aufgrund ihrer relativ komplexen Betriebseigenschaften eine verhältnismäßig aufwendige Strom- und Spannungsversorgung. So muß der Gasentladungslampe während des Betriebs eine im wesentlichen konstante elektrische Leistung zugeführt werden. Da sich die Brennspannung einer Gasentladungslampe, abhängig vom Betriebszustand der Lampe weitestgehend selbsttätig einstellt, muß zur Leistungsregelung die entsprechende Stromstärke durch ein Vorschaltgerät eingestellt werden.

Hierzu sind Regeleinrichtungen bekannt, bei denen ein Schaltwandler vorgesehen ist, dessen Eingangsstrom zur Erzielung einer konstanten Ausgangsleistung geregelt wird.

Damit die Lampe nach dem Zünden mit hoher Zuverlässigkeit einen stabilen Betriebszustand einnimmt, wird der Lampe während eines vorgegebenen Zeitraumes eine Zusatzleistung zu der stationären Nennleistung zugeführt, wobei die Länge des vorgegebenen Zeitraumes, dazu noch von Betriebsparametern der Gasentladungslampe, beispielsweise der Brennspannung, während der Anlaufphase abhängen kann.

Aus der DE 40 15 398 A1 ist ein Verfahren und eine Einrichtung zur Lampenanlaufsteuerung bekannt, bei dem die Zusatzleistung z. B. von der Ausschaltzeit und der letzten Einschaltzeit der Gasentladungslampe abhängt.

Bei einer gattungsgemäßen Einrichtung ergibt sich nun folgendes Problem:

Da die Verlustleistung des mit der Gasentladungslampe verbundenen Vorschaltgerätes proportional zur Primärstromstärke ansteigt, muß der durch den Schaltregler fließende Primärstrom auf einen für die Dimensionierung des Vorschaltgerätes zulässigen Maximalwert begrenzt werden. Hierzu wird zweckmäßigerweise ein Begrenzer für das Regelsignal in den Regelkreis zur Leistungssteuerung eingefügt.

Die maximal vom Begrenzer zugelassene Primärstromstärke muß dabei mindestens so hoch gewählt werden, daß die stationäre Nennleistung der Gasentladungslampe beim Lampenanlauf von der Steuereinrichtung um die vorgegebene Zusatzleistung erhöht werden kann.

Da dieser maximale Primärstrom deutlich (beispielhaft um Faktor 2) über dem stationären Nennstrom liegt, ist die Verlustleistung des Vorschaltgerätes während der Anlaufphase der Gasentladungslampe gegenüber dem stationären Nennbetrieb um ein mehrfaches erhöht.

Der maximale durch den Begrenzer zugelassene Primärstrom für den Schaltregler kann sich aber auch während des stationären Betriebes nach der Anlaufphase, und zwar längerfristig, einstellen, wenn bei abgesunkener Bordnetzspannung des Kraftfahrzeuges der Schaltregler zur Leistungskonstanthaltung seinen Ausgangsstrom hochregelt. Daher muß das Vorschaltgerät, insbesondere der Schaltregler, auf eine dauerhafte Verlustleistung hin ausgelegt sein, die bei der maximal durch den Begrenzer zugelassenen Stromstärke (also der Stromstärke im Anlauffall bei maximaler Zusatzleistung) auftreten kann.

Ein Vorschaltgerät mit einem solchermaßen ausgelegten Schaltregler ist aber für den normalen stationären Nennbetrieb um ein mehrfaches überdimensioniert, was sich in seinen Kosten und seiner Baugröße negativ widerspiegelt.

Eine Dimensionierung des Schaltreglers auf die normale stationäre Nennbetriebsleistung und die relativ kurzfristig auftretende Zusatzleistung beim Lampenanlauf führt demgegenüber zu einer Zerstörung des Schaltreglers bei einem längerfristig erhöhten Primärstrom, wie er bei niedrigen Bordnetzspannungen auftritt.

Der Erfindung liegt daher die Aufgabe zugrunde, eine einfach und kostengünstig aufgebaute, gattungsgemäße Einrichtung zum Starten und Betreiben einer Gasentladungslampe in Kraftfahrzeugen zu schaffen, welche beim Lampenanlauf eine erhöhte Leistung zur Verfügung stellt und welche im stationären Nennbetrieb die Verlustleistung begrenzt, so daß eine überlastung ausgeschlossen ist.

Diese Aufgabe wird erfindungsgemäß dadurch gelöst, daß die Steuereinrichtung auch den Begrenzer für das Regelsignal, und zwar abhängig von Betriebsbedingungen der Gasentladungslampe steuert.

Bei dieser erfindungsgemäßen Ausgestaltung besitzt der Begrenzer ein dynamisches Verhalten, welches durch die Steuereinrichtung, die auch die Soll-Leistung des Reglers beim Lampenanlauf steuert, beeinflußt wird. So wird der Begrenzer bei Ansteuerung durch die Steuereinrichtung ein Steuersignal zulassen, welches eine mit der Zusatzleistung korrespondierende Primärstromstärke zuläßt. Da diese Zusatzleistung nur während des sehr kurzfristigen Lampenanlaufes (Größenordnung Sekunden) anliegt, ist eine überlastung des Schaltreglers hierdurch ausgeschlossen.

Fällt nach der Lampenanlaufphase das Signal der Steuereinrichtung, welches einem erhöhten Leistungs-Soll-Wert entspricht, an den Regler und den Begrenzer fort, so senkt der Begrenzer das maximal zulässige Reglersignal auf einen kleineren Wert ab, so daß unter ungünstigen Umständen (niedriger Bordnetzspannung) der Primärstrom des Schaltreglers auf einen Wert begrenzt wird, der auch bei längerfristigerem Vorliegen (Größenordnung Stunden) nicht zu einer derart hohen Verlustleistung führt, daß hierdurch der Schaltregler zerstört wird.

Da hierdurch der Schaltregler relativ leistungsarm dimensioniert werden kann, wird die gesamte Einrichtung besonders kleinbauend und kostengünstig herstellbar.

Weitere vorteilhafte Ausgestaltungen und Weiterbildungen der erfindungsgemäßen Einrichtung sind den Unteransprüchen und der Zeichnungsbeschreibung zu entnehmen.

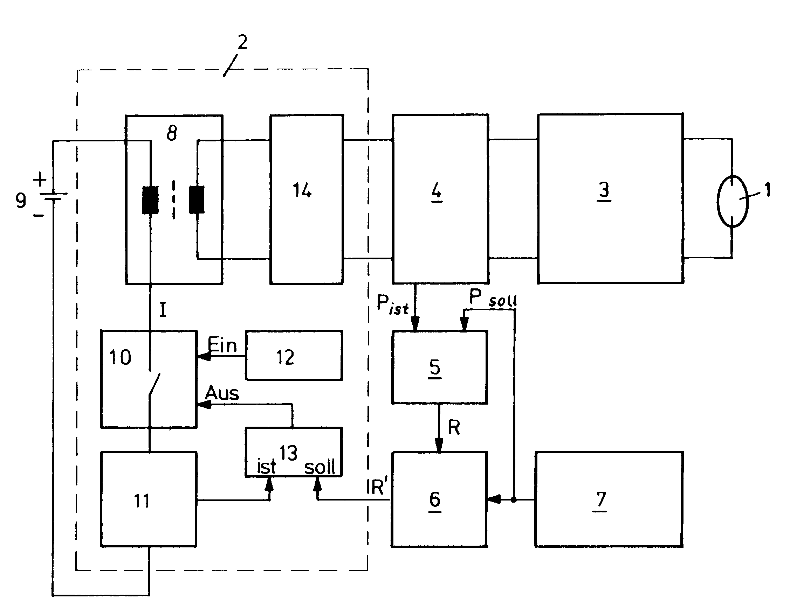

Im folgenden soll ein Ausführungsbeispiel der erfindungsgemäßen Einrichtung anhand der Zeichnung näher erläutert werden.

Die einzige Figur zeigt eine erfindungsgemäße Einrichtung zum Starten und Betreiben einer Gasentladungslampe (1) in Kraftfahrzeugen anhand eines Blockschaltbildes. Eine durchbrochen dargestellte Umrandung enthält die Bauelemente eines primärgetakteten Schaltreglers (2), der sehr einfach als Sperrwandler ausgebildet ist.

Bei diesem ist die primärseitige Wicklung eines Transformators (8) mit einer Spannungsquelle (9), speziell zum Beispiel mit dem Bordnetz eines Kraftfahrzeuges, verbunden. Weiterhin ist in den Primärkreis des Schaltreglers (2) ein Leistungsschalter (10) und eine Stromerfassungseinrichtung (11) geschaltet.

Der Leistungsschalter (10) erhält regelmäßige Einschaltsignale von einem Taktgeber (12). Ein Vergleicher (13) schaltet den Leistungsschalter (10) jeweils dann wieder aus, wenn das von der Stromerfassungeinrichtung (11) an seinen ersten Eingang gegebene Signal den Wert erreicht, den der Begrenzer (6) auf einen zweiten Eingang gibt. Die sekundärseitige Wicklung des Transformators (8) ist an einen Gleichrichter (14) angeschlossen, welcher am Ausgang des Schaltreglers (2) eine gegenüber der Spannung des Bordnetzes (9) erhöhte Gleichspannung abgibt.

Der Schaltregler (2) ist somit ein Gleichspannungs-Gleichspannungs-Wandler und bildet so eine zur Versorgung der Lampenansteuerungseinrichtung (3) benötigte hochohmige Spannungsquelle aus.

Da die Gasentladungslampe (1) vorteilhafterweise mit Wechselspannung betrieben wird, beinhaltet die Lampenansteuerungseinrichtung (3) einen Wechselrichter sowie ein Zündgerät, welches die zur Zündung benötigten Hochspannungsimpulse liefert. Da der genaue Aufbau solcher Lampenansteuerungseinrichtungen (3) bekannt ist, soll an dieser Stelle nicht weiter darauf eingegangen werden.

Zwischen dem Gleichrichter (14) und der Lampenansteuerungseinrichtung (3) ist eine Einrichtung (4) zur Erfassung der vom Schaltregler (2) abgegebenen Leistung eingefügt. Die Einrichtung (4) erzeugt z. B. durch Erfassung von Ausgangsstrom und Ausgangsspannung des Schaltreglers (2) ein Ausgangssignal (P_{Ist}), welches der Ausgangsleistung des Schaltreglers (2) entspricht. Dieses Ausgangssignal (P_{Ist}) gibt die Leistungserfassungseinrichtung (4) auf einen Eingang des Reglers (5). Eine Steuereinrichtung (7) beaufschlagt einen weiteren Eingang des Reglers (5) mit einem Leistungs-Soll-Signal (P_{Soll}). Der Regler (5) erzeugt ein von der Differenz zwischen Leistungs-Soll-Wert (P_{Soll}) und Leistungs-Ist-Wert (P_{Ist}) und von der Dauer des Vorliegens dieser Differenz abhängiges Regelsignal (R) und führt es einem Begrenzer (6) zu, welcher das Regelsignal auf einen Maximalwert begrenzt bzw. ein vom Regelsignal abhängiges Signal (R') abgibt, dessen Maximalwert begrenzt ist.

Der Begrenzer (6) führt sein Ausgangssignal (R') zur Regelung des Primärstromes (I) des Schaltreglers (2) dem Vergleicher (13) zu.

Die Steuereinrichtung (7) steuert weiterhin auch den Begrenzer (6) an und beeinflußt so den vom Begrenzer (6) vorgegebenen Maximalwert für das Regelsignal (R').

Im folgenden soll die Funktionsweise der erfindungsgemäßen Einrichtung anhand der Zeichnung näher erläutert werden.

Zur Regelung der der Gasentladungslampe (1) zugeführten Leistung erfaßt die Einrichtung (4) den momentan vom Gleichrichter (14) an die Lampenansteuerungseinrichtung (3) abgegebenen Leistungs-Ist-Wert (P_{Ist}).

Dieser Leistungs-Ist-Wert (P_{Ist}) wird neben einem Leistungs-Soll-Wert (P_{Soll}), welcher die Steuereinrichtung (7) vorgibt, dem Regler (5) zugeführt, welcher als I-Regler ausgebildet ist oder einen I-Regler beinhaltet und die Leistungsdifferenz (P_{Soll}) minus (P_{Ist}) zeitlich aufintegriert.

Den so gebildeten Reglerwert (R) gibt der Regler (5) an den Begrenzer (6), welcher den Wert (R) auf einen Maximalwert begrenzt, falls er einen vorgegebenen Maximalwert übersteigt. Das so begrenzte Signal (R') gibt der Begrenzer (6) als Soll-Wert an den Vergleicher (13), welcher die Primärstromstärke (I) des Schaltreglers (2) steuert.

Der Strom durch die Primärspule des Transformators (8) des Schaltreglers (2) wird durch den Taktgeber (12) periodisch über den Leistungsschalter (10) eingeschaltet und steigt dann zeitlich linear an. Ein den Primärstrom (I) entsprechendes Signal gibt die Stromerfassung (11) an den Vergleicher (13), welcher durch Ansteuerung des Leistungsschalters den Primärstrom (I) abschaltet, sobald das von der Stromerfassung (11) abgegebene Signal das vom Begrenzer (6) vorgegebene Signal (R') erreicht. Nach dem Abschalten des Primärstromes (I) überträgt der Transformator (8) die in seiner Primärspule gespeicherte Energie auf seine Sekundärspule. Da die jeweilige Einschaltdauer des Leistungsschalters (10), und damit die Höhe des Primärstromes (I), ein Maß für die übertragene Leistung darstellt, erhält man so einen Regelkreis zur Konstanthaltung der Ausgangsleistung des Schaltreglers (2).

Die Höhe der sich so einstellenden Ausgangsleistung des Schaltreglers (2) gibt die Steuereinrichtung (7) dem Regler (5) in Form des Leistungs-Soll-Wertes (P_{Soll}) vor. Dieser Leistungs-Soll-Wert (P_{Soll}) entspricht etwa der Brennleistung der Gasentladungslampe (1).

Während der Anlaufphase der Gasentladungslampe (1) gibt die Steuereinrichtung (7) nach dem Zünden der Lampe (1) dem Regler (5) einen Leistungs-Soll-Wert (P_{Soll}) vor, der ungefähr der doppelten stationären Nennleistung der Gasentladungslampe (1) entspricht. Entsprechend muß dabei der Begrenzer (6) einen Maximalwert für das Regelsignal und damit den Primärstrom (I) vorgeben, der die Ansteuerung der Gasentladungslampe (1) mit dieser erhöhten Anlaufleistung ermöglicht.

Da die Steuereinrichtung (7) auch den Begrenzer (6) mit einem Signal beaufschlagt, stellt der Begrenzer (6) den zugehörigen Maximalwert für das Regelsignal ein. Der Primärstrom (I) durch den Transformator (8) kann somit beispielsweise auf etwa den doppelten Wert gegenüber dem stationären Betrieb der Gasentladungslampe (1) ansteigen, wodurch sich die Verlustleistung des Schaltreglers (2) auf etwa den vierfachen Wert erhöht. Da die Lampenanlaufphase aber sehr kurz ist, ist dieses ohne Schaden für den Schaltregler (2) möglich.

Anders sieht dieses während der stationären Betriebsphase der Gasentladungslampe (1) aus. Hier gibt zwar die Steuereinrichtung (7) dem Regler (5) einen deutlich niedrigeren Leistungs-Soll-Wert (P_{Soll}) vor als in der Anlaufphase, würde aber der Begrenzer (6) einen gleichgroßen maximalen Primärstrom (I) zulassen wie in der Anlaufphase, könnte dies unter ungünstigen Umständen zu einer Zerstörung des Schaltreglers (2) führen.

Diese ungünstigen Umstände liegen dann vor, wenn die Spannung des Bordnetzes (9) des Kraftfahrzeuges absinkt und der Regelkreis zur Konstanthaltung der Ausgangsleistung des Schaltreglers (2) die Primärstromstärke bis zu dem vom Begrenzer (6) zugelassenen Maximalwert hochregelt.

Da hierdurch die Verlustleistung des Schaltreglers (2), und zwar für einen längeren Zeitraum, stark ansteigt, ist bei normaler Dimensionierung des Schaltreglers (2) eine Zerstörung unvermeidlich. Daher steuert erfindungsgemäß die Steuereinrichtung (7) auch den Begrenzer (6) an, welcher daraufhin nach Abschluß der Anlaufphase den maximal zulässigen Primärstrom (I) auf einen Wert begrenzt, der auch im Dauerbetrieb nicht zu einer Zerstörung des Schaltreglers (2) führt.

Hierdurch führt ein Absinken der Bordnetzspannung lediglich zu einem Ansteigen des Primärstromes (I) bis zu einem maximal zulässigen ungefährlichen (!) Wert. Somit führt ein Absinken der Bordnetzspannung im ungünstigsten Fall, nämlich, wenn die vom Schaltregler (2) abgegebene Ausgangsleistung nicht mehr zum Betrieb der Gasentladungslampe (1) ausreicht, zu einem Verlöschen der Lampe, keinesfalls jedoch zu einer Zerstörung des Schaltreglers (2).

### Bezugszeichenliste

Einrichtung zum Starten und Betreiben einer Gasentladungslampe in Kraftfahrzeugen
- 1: Gasentladungslampe
- 2: Schaltregler
- 3: Lampenansteuerungseinrichtung
- 4: Einrichtung zur Leistungserfassung
- 5: Regler
- 6: Begrenzer
- 7: Steuereinrichtung
- 8: Transformator
- 9: Spannungsquelle (Bordnetz)
- 10: Leistungsschalter
- 11: Stromerfassungeinrichtung
- 12: Taktgeber
- 13: Vergleicher
- 14: Gleichrichter
- P_{Ist}: Leistungs-Ist-Wert (-signal)
- P_{Soll}: Leistungs-Soll-Wert (-signal)
- R: Reglersignal
- R': begrenztes Regelsignal
- I: Primärstrom

## Patentansprüche

1. Einrichtung zum Starten und Betreiben einer Gasentladungslampe (1) in Kraftfahrzeugen, mit einem primärgetakteten Schaltregler (2) zur Versorgung einer Lampenansteuerungseinrichtung (3) für die Gasentladungslampe (1), mit einer Einrichtung (4) zur Erfassung der Ausgangsleistung des Schaltreglers (2), mit einem Regler (5), der aufgrund der Ausgangsleistung des Schaltreglers (2) ein Regelsignal (R) zur Beeinflussung des Primärstromes (I) des Schaltreglers (2) erzeugt, mit einem Begrenzer (6) zur Begrenzung des Regelsignales (R), mit einer Steuereinrichtung (7), die abhängig von den Betriebsbedingungen der Gasentladungslampe (1) dem Regler (5) einen Leistungs-Soll-Wert vorgibt, dadurch gekennzeichnet, daß die Steuereinrichtung (7) auch den Begrenzer (6) für das Regelsignal (R), und zwar abhängig von Betriebsbedingungen der Gasentladungslampe (1) steuert.

2. Einrichtung nach Anspruch 1, dadurch gekennzeichnet, daß der primärgetaktete Schaltregler (2) als pulsweitenmodulierter Sperrwandler ausgeführt ist.

3. Einrichtung nach Anspruch 1, dadurch gekennzeichnet, daß die Lampenansteuerungseinrichtung (3) einen Wechselrichter und ein Zündgerät beinhaltet.

4. Einrichtung nach Anspruch 1, dadurch gekennzeichnet, daß der Regler (5) das Regelsignal (R) in Abhängigkeit von der Differenz aus Leistungs-Soll-Wert (P_{Soll}) und Leistungs-Ist-Wert (P_{Ist}) und von der Zeitdauer des Anliegens der Differenz zwischen Leistungs-Soll-Wert (P_{Soll}) und Leistungs-Ist-Wert (P_{Ist}) bildet.

5. Einrichtung nach Anspruch 4, dadurch gekennzeichnet, daß der Regler (5) ein I-Regler ist oder einen I-Regler beinhaltet.

6. Einrichtung nach Anspruch 1, dadurch gekennzeichnet, daß die Steuereinrichtung (7) eine Lampenanlaufsteuerung ist und daß als maßgebende Betriebsbedingung die Einschaltdauer der Gasentladungslampe vorgesehen ist.

7. Einrichtung nach Anspruch 1 oder 6, dadurch gekennzeichnet, daß die Steuereinrichtung (7) in einem vorgegebenen Zeitraum nach dem Einschalten der Gasentladungslampe (1) dem Regler (5) einen gegenüber dem stationären Nennwert erhöhten Leistungs-Soll-Wert (P_{Soll}) vorgibt und diesen Wert nach Ablauf des vorgegebenen Zeitraums auf den stationären Nennwert absenkt.

8. Einrichtung nach Anspruch 1 oder 6, dadurch gekennzeichnet, daß die Steuereinrichtung (7) in einem vorgegebenen Zeitraum nach dem Einschalten der Gasentladungslampe (1) dem Begrenzer (6) einen gegenüber dem stationären Nennwert erhöhten Maximalwert für das begrenzte Regelsignal (R') vorgibt und diesen erhöhten Wert nach Ablauf des vorgegebenen Zeitraums auf den stationären Nennwert absenkt.

9. Einrichtung nach Anspruch 7 oder 8, dadurch gekennzeichnet, daß die Steuereinrichtung (7) während des vorgegebenen Zeitraumes den Regler (5) und den Begrenzer (6) mit erhöhten Vorgabewerten ansteuert, die ungefähr doppelt so groß sind, wie die stationären Nennwerte.

10. Einrichtung nach Anspruch 1, dadurch gekennzeichnet, daß zumindest der Regler (5), der Begrenzer (6) und die Steuereinrichtung (7) als Mikrocomputerschaltung ausgebildet sind.

## Claims

1. A device for starting and operating a gas discharge lamp (1) in motor vehicles, having a primary-clocked switching controller (2) for supplying a lamp triggering device (3) for the gas discharge lamp (1), having a device (4) for detecting the output of the switching controller (2), having a controller (5), which based on the output of the switching controller (2) generates a control signal (R) for influencing the primary current (I) of the switching controller (2), having a limiter (6) for limiting the control signal (R), and having a control device (7) which predetermines a power setting value for the controller (5) depending on the operating conditions of the gas discharge lamp (1), characterised in that the control device (7) also controls the limiter (6) for the control signal (R), in fact depending on the operating conditions of the gas discharge lamp (1).

2. A device according to claim 1, characterised in that the primary-clocked switching controller (2) is constructed as a pulse-width modulated blocking oscillator.

3. A device according to claim 1, characterised in that the lamp triggering device (3) comprises a current inverter and a starter device.

4. A device according to claim 1, characterised in that the controller (5) forms the control signal (R) depending on the difference of the power setting value (Pₛₑₜ) and the power feedback value (P_{feed}) and on the duration of the existence of the difference between the power setting value (Pₛₑₜ) and the power feedback value (P_{feed}).

5. A device according to claim 4, characterised in that the controller (5) is an integral control unit or comprises an integral control unit.

6. A device according to claim 1, characterised in that the control device (7) is a lamp starting controller and that the operating time of the gas discharge lamp is provided as the determining operating condition.

7. A device according to claims 1 or 6, characterised in that within a predetermined time interval after the switching-on of the gas discharge lamp (I) the control device (7) predetermines a power setting value (Pₛₑₜ) for the controller (5) which is increased compared with the steady-state rated value and reduces this value to the steady-state rated value after the elapse of the predetermined time interval.

8. A device according to claims I or 6, characterised in that within a predetermined time interval after the switching-on of the gas discharge lamp (1) the control device (7) predetermines a maximum value for the limited control signal (R') for the limiter (6) which is increased compared with the steady-state rated value and reduces this increased value to the steady-state rated value after the elapse of the predetermined time interval.

9. A device according to claims 7 or 8, characterised in that during the predetermined time interval the control device (7) triggers the controller (5) and the limiter (6) with increased allowed values which are approximately twice as high as the steady-state rated values.

10. A device according to claim 1, characterised in that at least the controller (5), the limiter (6) and the control device (7) are constructed as a microcomputer circuit.

## Revendications

1. Dispositif pour l'allumage et le fonctionnement d'une lampe luminescente à gaz (1) dans des véhicules, comportant un régulateur de commutation (2) à cadence primaire pour alimenter un dispositif d'amorçage (3) de la lampe luminescente à gaz (1), un dispositif (4) de saisie de la puissance de sortie du régulateur de commutation (2), un régulateur (5) qui engendre sur la base de la puissance de sortie du régulateur de commutation (2) un signal régulateur (R) pour influencer le courant primaire (I) du régulateur de commutation (2), un limiteur (6) destiné à limiter le signal régulateur (R), un dispositif de commande (7) qui donne au régulateur (5) une valeur de puissance de consigne en fonction des conditions de fonctionnement de la lampe luminescente à gaz (1), caractérisé en ce que le dispositif de commande (7) commande aussi le limiteur (6) pour le signal régulateur (R), et ceci en fonction des conditions de fonctionnement de la lampe luminescente à gaz (1).

2. Dispositif selon la revendication 1, caractérisé en ce que le régulateur de commutation (2) à cadence primaire est réalisé sous forme de convertisseur à oscillateur bloqué dont les impulsions sont modulées en largeur.

3. Dispositif selon la revendication 1, caractérisé en ce que le dispositif d'amorçage (3) de la lampe contient un onduleur et un starter.

4. Dispositif selon la revendication 1, caractérisé en ce que le régulateur (5) forme le signal régulateur (R) en fonction de la différence résultant de la valeur de puissance de consigne (Pₛₒₗₗ) et de la valeur de puissance effective (Pᵢₛₜ) et de la durée de l'application de la différence entre la valeur de puissance de consigne (Pₛₒₗₗ) et la valeur de puissance effective (Pᵢₛₜ).

5. Dispositif selon la revendication 4, caractérisé en ce que le régulateur (5) est un régulateur intégral ou contient un régulateur intégral.

6. Dispositif selon la revendication 1, caractérisé en ce que le dispositif de commande (7) est une commande de démarrage de la lampe et en ce que la durée d'allumage de la lampe luminescente à gaz est prévue comme condition déterminante pour le fonctionnement.

7. Dispositif selon l'une ou l'autre des revendications 1 et 6, caractérisé en ce que pendant une période prédéterminée après l'allumage de la lampe luminescente à gaz (1), le dispositif de commande (7) donne au régulateur (5) une valeur de puissance de consigne (Pₛₒₗₗ) accrue par rapport à la valeur nominale stationnaire et abaisse cette valeur à la valeur nominale stationnaire après l'expiration de la période prédéterminée.

8. Dispositif selon l'une ou l'autre des revendications 1 et 6, caractérisé en ce que pendant une période prédéterminée après l'allumage de la lampe luminescente à gaz (1), le dispositif de commande (7) donne au limiteur (6) une valeur maximale accrue par rapport à la valeur nominale stationnaire pour le signal régulateur limité (R') et abaisse cette valeur accrue à la valeur nominale stationnaire après l'expiration de la période prédéterminée.

9. Dispositif selon l'une ou l'autre des revendications 7 et 8, caractérisé en ce que pendant la période prédéterminée, le dispositif de commande (7) pilote le régulateur (5) et le limiteur (6) avec des valeurs de référence accrues qui sont approximativement le double des valeurs nominales stationnaires.

10. Dispositif selon la revendication 1, caractérisé en ce qu'au moins le régulateur (5), le limiteur (6) et le dispositif de commande (7) sont réalisés sous forme de circuits de micro-ordinateur.
